# EUROPEAN PATENT SPECIFICATION

(11) **EP 1 281 697 B1**
(45) Date of publication and mention of the grant of the patent: **10.10.2007**
(21) Application number: 02077758.7
(22) Date of filing: 08.07.2002
(51) Int. Cl.: C04B 35/80, C04B 35/624, C04B 35/117, C04B 35/18, C04B 35/185

(54) **Oxide based ceramic matrix composites**
Keramische Matrix-Verbundwerkstoffe auf der Basis von Oxyde
Composites matrices céramiques à base d'oxydes

(30) Priority: 30.07.2001 US 918158
(43) Date of publication of application: 05.02.2003
(73) Proprietor: The Boeing Company, Chicago, IL 60606-1596 (US)
(72) Inventor: DiChiara, Robert A. Jr., Carlsbad, CA 92009 (US)
(74) Representative: Land, Addick Adrianus Gosling

(56) References cited:
- WO-A-02/085618
- GB-A- 804 756
- GB-A- 2 347 113
- US-A- 3 445 250
- US-A- 3 507 944
- US-A- 3 928 239
- US-A- 4 664 172
- US-A- 5 958 583
- LIU H-K ET AL: "The effect of sol/particle reaction on properties of two-dimensional ceramic matrix composites" MATERIALS LETTERS, NORTH HOLLAND PUBLISHING COMPANY. AMSTERDAM, NL, vol. 48, no. 3-4, April 2001 (2001-04), pages 230-241, XP004256757 ISSN: 0167-577X
- JURF, R. A., BUTNER, S. C.: "Advances in Oxide-Oxide CMC" JOURNAL OF ENGINEERING FOR GAS TURBINES AND POWER, vol. 122, no. 2, April 2000 (2000-04), pages 202-205, XP001119885

## Description

### TECHNICAL FIELD

The present invention generally relates to ceramic matrix composites and particularly to oxide-based ceramic matrix composites comprising sol gel and a process for making such composites.

### BACKGROUND OF THE INVENTION

Ceramic Matrix Composite (CMC) is an emerging material that can be used in high temperature structural environments for aerospace and industrial applications. Advanced structural ceramics are materials that have relatively high mechanical strength at high temperatures. These materials face a number of demanding environmental conditions such as high temperature, corrosive, and high acoustic environments.

The oxide based ceramic matrix composites (CMC) developed are economic, low dielectric, thermally stable, structural ceramic systems stable to at least 1260° C (2300 °F). The matrix can be reinforced with a variety of fibers. Preferably the fiber is, but not limited to, Nextel 720. The CMC's primary advantage over carbon - carbon and other high temperature composites is its low cost and near net-shape manufacturing process.

Prior to 1980 ceramics were considered monolithic, being made of one material. The advantages of monolithic ceramics is that the ceramic properties such as high strength, wear resistance, hardness, stiffness, corrosion resistance, thermal expansion and density can be varied depending on the starting materials. However the density of the monolithic ceramics are significantly lower (2214-3875 kg/m³, 0.08 - 0.14 lb/in³) compared to metallic counterparts (generally > 8304 kg/m³, 0.3 lb/in³). Also, these ceramics are not ductile like metal, and instead shatter or catastrophically fail. Catastrophic failure has kept designers from considering advanced structural ceramics in many structural applications.

In the mid-1980s a revolution in the field of ceramics took place with the development of new ceramic fibers (from Nippon Carbon and 3M) and the development of the Chemical Vapor Infiltration process (CVI). Fibers were added to the ceramic matrix producing a fiber-reinforced ceramics, which increased the ceramics strength, and toughness and eliminated or reduced catastrophic failure at high temperatures. Each unique type of fiber added to the ceramic mix gave unique properties to the material. The exploration of fiber types and resulting properties led to a number of combinations. Fiber mixes can be uniquely tailored to specific applications. These ceramics are known as ceramic matrix composite (CMC) or continuous-fiber-reinforced ceramic composites (CFCC) to help distinguish them from chopped fiber reinforced ceramics.

The key to the strength and toughness of CMC system is to maintain limited amount of bonding of the fiber matrix. This is difficult to achieve considering the amount of thermal energy that is being applied to the surface chemistry to the matrix and fiber surface. Success has been shown in four basic types of ceramic matrix system: (1) Chemical vapor infiltration (CVI), (2) glass ceramics, (3) organo-metallic derived from polymer precursors, and (4) oxide matrix ceramics.

As discussed above CMC produced using the CVI process overcomes the drawbacks of monolithic ceramics. However, one of the major drawbacks of infiltrating the fabric using the CVI process is it is expensive and slow to produce parts, sometimes taking as long as months. Further, the process is labor and capital intensive, and limited with respect to the size and shape of parts.

More recently, a number of CMC organic-metallic processes have been developed. These processes follow the same standard processing procedures and equipment developed for making organic composites, thereby eliminating many of the slow and costly limitations that were found with the CVI process. In these processes ceramic fibers are first made and woven into cloths, such as fiberglass or carbon fiber for organic composites. The flexible ceramic cloth is infiltrated with an organic-metallic matrix, for example, an epoxy matrix for organic composites. This impregnated cloth is then placed on a complex tool and processed under low pressure and low temperature in a process known as autoclaving. After autoclaving, a complex shaped ceramic structure is formed and then it is further heated in a furnace to finish the process.

Glass ceramic CMC typically start with glass powder, often formulated with silicates that are thermoplastically formed along with reinforcing fibers at very high temperature and pressures. The fibers must be protected with fiber interface coatings in order to control fiber matrix interface. The glass ceramic CMC is subjected to a free standing post cure to crystallize the matrix. Fiber interface coatings are susceptible to oxidation well below982.2°C (1800 °F). However, in a high-densified system such as this, the fiber coatings are protected from the oxidizing environment. High strengths have been achieved with flat panels, however the inability to manufacture complex shapes has greatly restricted the application glass ceramics.

Organo- metallic ceramics derived from polymer precursors are analogous to carbon-carbon ceramic matrices. A polymer composite is fabricated and then pyrolized to a ceramic. The volume loss during pyrolysis must be reinfiltrated with resin and pyrolized again. This process may be repeated up to ten times in order to achieve the densification necessary to provide oxidation protection to fiber coatings. The most common organo-metalic systems are Polysiazane and Blackgalas (Allied Signal). SiC fibers such as Nicalon are most commonly used with this system, along with fiber coating such as boron nitride (BN). The disadvantages to this system are the high cost, high dielectric constant and the susceptibility of the BN coatings to oxidation.

In the recent years, efforts have been made to manufacture oxide matrix ceramics that can withstand high temperatures greater than 1093.3°C (2000 °F). One such matrix developed was the aluminum phosphate bonded alumina oxide CMC. Fiber reinforcement was primary Nicalon 8 harness satin fabric. However, studies of the matrix found repetitive cycles in excess of 815.5°C (1500 °F) causing phase inversions in the matrix and limited use of the material to temperatures no greater than 760°C (1400 °F).

Due to the inherent, thermally instability in the aluminum phosphate system a sol-gel oxide matrix system with new oxide fibers was developed to overcome the temperature and strength limitations of the aluminum phosphate system.
GB 2347113 describes a method of manufacture of a ceramic matrix composite comprising forming a slurry of ceramic sol, filter particles and water; and impregnating fibres. The oxide based ceramic matrix composite (CMC) developed in accordance with the present invention is a economic a low dielectric, thermally stable, structural ceramic system good to above 1260°C(2300 °F) using sol-gel technology. The matrix can be reinforced with a variety of fibers. The present CMC's primary advantage over carbon - carbon and other high temperature composites is its low cost, near net-shape manufacturing process.

### SUMMARY OF THE INVENTION

The present invention provides shaped complex ceramic matrix composites (CMC) having superior properties at high temperatures obtainable by the process defined in claim 1. The CMC comprises a sol gel matrix with alumina particles mixed or blended in. The sol gel matrix is an aqueous colloidal suspension of a metal oxide, from 10 wt% to 25 wt% of the metal oxide. The metal oxide is selected from alumina (Al₂O₃), silica (SiO₂) or alumina-coated silica. The alumina particles have a size lying in the range of 0.1 to 1.5 microns and preferably from about 0.1 microns to about 1.0 microns. The alumina particles comprise 30 wt% to about 60 wt% of the sol gel mixture.

A methods for making the CMC of the present invention is also provided, as defined in claim 1. The method of the present invention comprises providing a sol gel matrix and mixing or blending into the matrix alumina particles. The alumina particles comprise 30 wt% to about 60 wt% of the blended mixture. The pH of the mixture is adjusted by the addition of acid or base to prevent gelling of the mixture. The sol gel mixture is then treated to remove any soft agglomerates that form, producing a homogeneous suspension. This homogeneous solution is then infiltrated into a suitable ceramic cloth or fabric. The infiltrated fabric is then be calcined and scintered to form the CMC.

Complex tools are manufactured using the CMC of the present invention. The infiltrated fabric is slightly dried to develop a tack and then draped over the desired tool form, subject to a vacuum and optionally autoclaved. The tool form is then removed and the part is post cured at a temperature from about 815.5°C (1500 °F) to 1260°C (2300 °F).

One of the objects of the present invention is to manufacture ceramic matrix that can withstand high temperature, but has high porosity and strength.

Further areas of applicability of the present invention will become apparent from the detailed description provided hereinafter. It should be understood that the detailed description and examples, while indicating preferred embodiments of the invention, are intended for purposes of illustration only, since various changes and modifications within the scope of the invention will become apparent to those skilled in the art from this detailed description.

### DETAILED DESCRIPTION OF THE PREFERRED EMBODIMENTS

In accordance with the broad teachings of the present invention, a ceramic matrix composite is manufactured using a sol gel matrix mixture comprising a sol gel matrix and alumina particles. The mixture is then infiltrated into a suitable ceramic cloth or fabric to obtain a fiber reinforced ceramic matrix composite (CMC) that is suitable to make a number of complex shape tools.

The ceramic matrix composition comprises a sol gel and alumina particles. In a preferred embodiment, the sol gel is from about 40 wt% to about 70 wt% of the sol gel-alumina mixture. Sol gel is a material that can be used for making advanced materials including ceramics. There are two phases to the material, a liquid "sol", which is a colloidal suspension, and a solid "gel" phase. The transition from the liquid sol phase to the solid gel phase can be triggered by drying, heat treatment or increasing the pH to the basic range. The starting materials used in the preparation of the sol gel are usually inorganic metal salts or metal organic compounds such as metal alkoxides. In a preferred embodiment of the present invention, the sol gel comprises metal oxides, preferably alumina (Al₂O₃), silica (SiO₂) or alumina-coated silica and more preferably, alumina. The sol gel comprises 10 wt% to about 25 wt% of the metal oxide. Sol gels are commercially available or can be made by methods known to those skilled in the art.

The ceramic matrix composite comprises alumina particles blended with or mixed into the sol gel to produce a sol gel- alumina mixture. The alumina is 30 wt% to 60 wt% of the mixture. The alumina particles have a size lying in the range of 0.1 to 1.5 microns. Preferably the alumina particles have a size less than 1 micron and more preferably from about 0.1 microns to about 1.0 microns. A smaller particle size will result in better infiltration of the sol gel-alumina mixture into a ceramic cloth or fabric to form a CMC. Another advantage of a smaller particle size is improved bonding and scintering in the CMC.

The composition of the mixture will determine the properties of the CMC of the present invention. An increasing ratio (by weight) of alumina to silica will give a CMC that has superior refractory properties at high temperatures. For example, a mixture having 100% alumina will have the best refractory properties. However, the addition of silica provides the CMC with additional strength. Therefore, in a preferred embodiment, the amount of silica in the sol gel-alumina mixture is from about 0 wt% to about 10 wt%. In more preferred embodiment, silica comprises no more than approximately one third of the sol gel mixture.

In a further embodiment, fillers can be added to the sol gel-alumina mixture. The filler should be no greater than 50 wt%. A preferred filler is mullite.

The present invention also provides a method for producing a shaped complex matrix composite, comprising the steps of blending or mixing alumina particles into a sol gel matrix, treating the matrix to produce a homogeneous suspension and infiltrating a ceramic cloth or fabric with the sol gel-alumina mixture. Alumina particles are blended with or mixed into the sol gel matrix. The amount of alumina is 30 wt% to 60 wt%. The addition of alumina particles to the sol gel matrix results in a mixture that is thick and has low viscosity.

The pH of the sol gel mixture is adjusted to neutral pH, if necessary. For example, addition of the alumina to the sol gel matrix can result in a mixture that is more alkaline. This change is pH may trigger the undesired transition between the liquid "sol" into the solid "gel". To prevent this, acid may be added to neutralize the mixture. In a preferred embodiment, the amount of acid added to the mixture is from about 0.1 wt% to about 0.3 wt% and more preferably about 0.1 wt%. Suitable acids include, but are not limited to, nitric acid, hydrochloric acid or sulfuric acid. In a preferred embodiment, the acid is nitric acid.

The sol gel-alumina mixture is treated to produce a homogeneous suspension. The mixture may have soft agglomerates formed from agglomeration of the particles present as a suspension that may interfere with the infiltration of the mixture into the ceramic fabric. Methods for creating a homogeneous suspension are well known in the art. Non-limiting examples include ball milling, attritor milling, and high-shear mixing. In a preferred embodiment, the mixture is ball milled in an alumina media. More preferably, the mixture is ball milled for four hours to produce a homogeneous suspension. The resulting material produced after the ball milling process is a homogeneous suspension and smooth slurry having no agglomeration of particles.

The resulting sol gel-alumina mixture slurry is then infiltrated into a ceramic cloth or fabric using any of the commonly used infiltrating methods. Non-limiting examples of ceramic fabrics are Nextel 720, Nextel 610, Nextel 550, Nextel 312, Nicalon, Altex or Almax. Preferably the matrix is infiltrated using a doctors blade or a pinched roller set up. Both of these methods ensure complete infiltration of the matrix into the fiber to form a reinforced matrix. The reinforced matrix is dried to develop a tack and then draped on the desired complex tool shape. The tool is then calcined under vacuum. During the calcining, the dried infiltrated fabric is heated to partially remove the volatile components. However, it is not heated enough to react the components of the mixture to go from a sol to a gel. The parameters of the drying and calcining steps are dependent upon many factors including the dimensions of the tool. In a further embodiment, the steps of infiltrating, drying and calcining can be repeated to achieve the desired density of the CMC.

In another embodiment, the tools are removed and the dried and heated infiltrated fabric retains the desired shape. The infiltrated fabric is then densified fully by sintering it. Sintering involves heating the infiltrated fabric to react the sol gel-alumina mixture to transition from the liquid sol to the solid gel. Sintering will also volatilize any remaining volatile components of the sol gel-alumina mixture. Additionally, scintering will oxidize the metal particles in the CMC as well as give the CMC load bearing strength.

The foregoing and other aspects of the invention may be better understood in connection with the following examples, which are presented for purposes of illustration and not by way of limitation.

### EXAMPLE 1

### 100% Alumina Ceramic Matrix

Alumina Sol (14N-4-25, Vista Chemicals) containing 25% solids of colloidal alumina (Al₂O₃) in water was mixed in a blender with submicron alumina powder (SM-8, Baikowski). The matrix contained 57 wt% of alumina sol and 43 wt% of alumina powder. Several drops of nitric acid (about 0.1%) were added to the matrix to balance the pH. The matrix was then ball milled with alumina media for 4 hours before infiltrating into the fabric.

The matrix mixture was infiltrated into the fabric using a doctor blade or a pinched roller set up. This allowed the matrix to fully infiltrate into the fabric. After the fabric had been infiltrated, the matrix was slightly dried to develop tack. the material was then draped on complex tools, vacuum bagged having standard bleeders and breathers used in the organic composite industry and autoclaved to 350 °F. After exposing the matrix to heat to set the matrix, the vacuum bag and tools were removed. The resulting part was post cured free standing between 1500 °F and 2300 °F.

### EXAMPLE 2

### Alumina/Silica Ceramic Matrix

Alumina-coated Silica Sol (1056, Nalco Chemicals) containing 20% solids of colloidal silica (SiO₂) coated with alumina (Al₂O₃) in water was mixed in a blender with submicron alumina powder (SM-8, Baikowski). The matrix contained 57 wt% of alumina-coated silica sol and 43 wt% of alumina powder. Several drops of nitric acid (about 0.1%) were added to the matrix to balance the pH. The matrix was then ball milled with alumina media for 4 hours before infiltrating into the fabric. The fabric was infiltrated by the same method as described in Example 1.

### EXAMPLE 3

### Alumina/Silica Ceramic Matrix

Silica Sol (2327, Nalco Chemicals) containing 20% solids of colloidal silica (SiO₂) in water was mixed in a blender with submicron alumina powder (SM-8, Baikowski). The matrix contained 57 wt% of alumina-coated silica sol and 43 wt% of alumina powder. Several drops of nitric acid (about 0.1%) were added to the matrix to balance the pH. The matrix was then ball milled with alumina media for 4 hours before infiltrating into the fabric. The fabric was infiltrated by the same method as described in Example 1.

Those skilled in the art can now appreciate from the foregoing description that the broad teachings of the present invention can be implemented in a variety of forms. Therefore, while this invention has been described in connection with particular examples thereof, the scope of the invention is limited by the claims.

## Claims

1. A process for providing a shaped, complex ceramic matrix composite part, comprising the steps of:
a) providing a sol-gel matrix of an aqueous colloidal suspension of a metal oxide, which metal oxide is selected from the following; alumina, silica or alumina coated silica,
b) mixing alumina particles, having a size lying in the range of 0.1-1.5 µm, into the sol-gel matrix to form the ceramic matrix, wherein the sol-gel comprises 10-25 wt% of the metal oxide solids, and wherein the alumina particles comprise 30-60 wt % of the ceramic matrix,
c) adjusting the pH to prevent gelling of the ceramic matrix,
d) treating the matrix to produce a homogeneous suspension,
e) infiltrating this suspension into a ceramic cloth or fabric to provide a reinforced matrix,
f) drying this reinforced matrix to develop a tack,
g) draping the dried, reinforced matrix onto a tool shape,
h) calcining the matrix draped on the tool shape under vacuum, whereby the dried reinforced matrix is heated to such a degree that volatile components are at least partially removed, without gelling of the sol,
i) removing the shaped matrix from the tool shape,j) post curing the shaped matrix at a temperature of between 815.5° C (1500° F) -1260° C (2300° F) to provide the composite part.

2. The process according to claim 1, wherein the pH is adjusted by adding nitric acid at 0.1-0.3 wt % of the matrix.

3. The process according to any of the preceding claims wherein, following removal of the shaped matrix from the tool shape and prior to post curing, the shaped matrix is subjected to a further drying step.

4. The process according to any of the preceding claims wherein the homogeneous suspension is created by ball-milling.

5. The process according to any of the preceding claims wherein the metal oxide is alumina.

6. The process according to any of the preceding claims 1-4, whereing the metal oxide is silica.

7. The process according to any of the preceding claims 1-4, wherein the metal oxide is alumina coated silica.

8. The process according to claims 6 or 7, wherein the amount of silica in the sol-gel matrix comprises no more than approximately one third of the sol-gel matrix.

9. The process according to any of the preceding claims, further comprising the step of adding a filler to the matrix, which filler is mullite and is present at no more than 50 wt%.

10. The process according to any of the preceding claims, wherein the post-curing step comprises sintering.

11. The process according to any of the preceding claims wherein, the infiltrating step and the calcining step are repeated.

12. A complex ceramic matrix composite part, obtainable according to any of the preceding claims.

## Patentansprüche

1. Verfahren zur Bildung eines geformten komplexen Keramikmatrixverbundteils, umfassend die Stufen:
(a) Bereitstellen einer Sol-Gel-Matrix aus einer wässrigen kolloidalen Suspension eines Metalloxids, wobei das Metalloxid ausgewählt ist aus Aluminiumoxid, Siliziumdioxid und aluminiumoxidbeschichtetem Siliziumdioxid,
(b) Einmischen von Aluminiumoxidteilchen mit einer Größe im Bereich von 0,1-1,5 µm in die Sol-Gel-Matrix, um eine Keramikmatrix zu bilden, wobei das Sol-Gel 10-25 Gew.-% der Metalloxidfeststoffe umfasst und wobei die Aluminiumoxidteilchen 30-60 Gew.-% der Keramikmatrix ausmachen,
(c) Einstellen des pH-Werts, um das Gelieren der Keramikmatrix zu verhindern,
(d) Behandeln der Matrix zur Herstellung einer homogenen Suspension,
(e) Infiltrieren dieser Suspension in ein Keramiktuch oder -gewebe, um eine verstärkte Matrix zu ergeben,
(f) Trocknen dieser verstärkten Matrix, um eine Klebrigkeit zu entwickeln,
(g) Drapieren bzw. Streckformen der getrockneten verstärkten Matrix auf eine Werkzeugform,
(h) Kalzinieren der auf die Werkzeugform drapierten bzw. streckgeformten Matrix unter Vakuum, wodurch die getrocknete verstärkte Matrix so stark erhitzt wird, dass flüchtige Komponenten zumindest teilweise entfernt werden, ohne dass das Sol in den Gelzustand übergeht,
(i) Entfernen der geformten Matrix aus der Werkzeugform,
(j) Nachhärten der getrockneten Matrix bei einer Temperatur zwischen 815,5°C (1500°F) und 1260°C (2300°F), um das Verbundteil zu bilden.

2. Verfahren nach Anspruch 1, wobei der pH-Wert durch Zugabe von Salpetersäure in einer Menge von 0,1-0,3 Gew.-% der Matrix eingestellt wird.

3. Verfahren nach einem der voranstehenden Ansprüche, wobei die geformte Matrix nach dem Entfernen der geformten Matrix aus der Werkzeugform und vor dem Nachhärten einer weiteren Stufe des Trocknens unterworfen wird.

4. Verfahren nach einem der voranstehenden Ansprüche, wobei die homogene Suspension mittels einer Kugelmühle hergestellt wird.

5. Verfahren nach einem der voranstehenden Ansprüche, wobei das Metalloxid Aluminiumoxid ist.

6. Verfahren nach einem der voranstehenden Ansprüche 1-4, wobei das Metalloxid Siliziumdioxid ist.

7. Verfahren nach einem der voranstehenden Ansprüche 1-4, wobei das Metalloxid aluminiumbeschichtetes Siliziumdioxid ist.

8. Verfahren nach den Ansprüchen 6 oder 7, wobei die Menge des Siliziumdioxids in der Sol-Gel-Matrix nicht mehr als etwa ein Drittel der Sol-Gel-Matrix ausmacht.

9. Verfahren nach einem der voranstehenden Ansprüche, zusätzlich umfassend die Stufe des Zugebens eines Füllstoffs zu der Matrix, wobei der Füllstoff Mullit ist und in einer Menge von nicht mehr als 50 Gew.-% vorhanden ist.

10. Verfahren nach einem der voranstehenden Ansprüche, wobei die Stufe des Nachhärtens ein Sintern umfasst.

11. Verfahren nach einem der voranstehenden Ansprüche, wobei die Stufe des Infiltrierens und die Stufe des Kalzinierens wiederholt werden.

12. Komplexes Keramikmatrixverbundteil erhältlich nach einen der voranstehenden Ansprüche.

## Revendications

1. Procédé de fourniture d'une pièce composite à matrice céramique complexe, mise en forme, comprenant les étapes consistant à :
a) fournir une matrice sol-gel d'une suspension colloïdale aqueuse d'un oxyde de métal, lequel oxyde de métal est choisi parmi ce qui suit : l'alumine, la silice ou la silice revêtue d'alumine,
b) mélanger des particules d'alumine, ayant une taille se situant dans la gamme allant de 0,1 à 1,5 µm, dans la matrice sol-gel pour former la matrice céramique, où le sol-gel comprend 10 à 25 % en poids des solides d'oxyde de métal, et où les particules d'alumine comprennent 30 à 60 % en poids de la matrice céramique,
c) ajuster le pH pour empêcher la gélification de la matrice céramique,
d) traiter la matrice pour produire une suspension homogène,
e) infiltrer cette suspension dans un tissu ou une étoffe céramique pour fournir une matrice renforcée,
f) sécher cette matrice renforcée pour développer une adhérence,
g) draper la matrice renforcée, sèche sur une forme d'outil,
h) calciner la matrice drapée sur la forme d'outil sous vide, moyennant quoi la matrice renforcée sèche est chauffée à un tel degré que les composants volatils sont au moins partiellement enlevés, sans gélification du sol,
i) enlever la matrice mise en forme de la forme d'outil,
j) post durcir la matrice mise en forme à une température comprise entre 815,5 °C (1 500 °F) et 1 260 °C (2 300 °F) pour fournir la pièce composite.

2. Procédé selon la revendication 1, dans lequel le pH est ajusté en ajoutant de l'acide nitrique à 0,1 à 0,3 % en poids de la matrice.

3. Procédé selon l'une quelconque des revendications précédentes, dans lequel, après l'enlèvement de la matrice mise en forme de la forme d'outil et avant le post durcissement, la matrice mise en forme est soumise à une étape de séchage supplémentaire.

4. Procédé selon l'une quelconque des revendications précédentes, dans lequel la suspension homogène est créée par un broyage à boulets.

5. Procédé selon l'une quelconque des revendications précédentes, dans lequel l'oxyde de métal est l'alumine.

6. Procédé selon l'une quelconque des revendications précédentes 1 à 4, dans lequel l'oxyde de métal est la silice.

7. Procédé selon l'une quelconque des revendications précédentes 1 à 4, dans lequel l'oxyde de métal est la silice revêtue d'alumine.

8. Procédé selon l'une quelconque des revendications 6 ou 7, dans lequel la quantité de silice dans la matrice sol-gel constitue pas plus d'approximativement un tiers de la matrice sol-gel.

9. Procédé selon l'une quelconque des revendications précédentes, comprenant en outre l'étape d'ajout d'une charge à la matrice, laquelle charge est la mullite et est présente à pas plus de 50 % en poids.

10. Procédé selon l'une quelconque des revendications précédentes, dans lequel l'étape de post durcissement comprend un frittage.

11. Procédé selon l'une quelconque des revendications précédentes, dans lequel l'étape d'infiltration et l'étape de calcination sont répétées.

12. Pièce composite à matrice céramique complexe, pouvant être obtenue selon l'une quelconque des revendications précédentes.
